# EUROPEAN PATENT APPLICATION

(11) **EP 1 164 686 A2**
(43) Date of publication of application: **19.12.2001**
(21) Application number: 01000189.9
(22) Date of filing: 28.05.2001
(51) Int. Cl.: H02K 3/40

(54) **A field compensation layer in a winding**

(30) Priority: 29.05.2000 FI 20001279
(71) Applicant: ABB Industry Oy, 00380 Helsinki (FI)
(72) Inventor: Jäppinen, Jari, 00160, Helsinki (FI); Keskinen, Eero, 02970, Espoo (FI); Vilkko, Ensio, 00320, Helsinki (FI)
(74) Representative: Peltonen, Antti Sakari

(57) **Abstract**

The invention relates to a field compensation layer in a winding, wherein the winding comprises an insulation layer (6) on the surface thereof. The field compensation layer (3) comprises an arrangement forming a capacitance chain arranged onto the surface of a coil section (7), the arrangement comprising several circular or tapered elements (4) surrounding the coil section (7) connected from one side thereof to the insulation layer (6) of the winding made of an at least partly electricity conductive material and placed in the longitudinal direction of the winding and insulation layers (5) arranged between said elements.

## Description

### BACKGROUND OF THE INVENTION

The invention relates to a field compensation layer in a winding, wherein the winding comprises an insulation layer on the surface thereof.

In rotating electric machines the rotating motion of a rotor allows either to generate electric energy using the force rotating the rotor or to change electric energy into the rotating motion of the rotor. When altering high powers the size of a rotating machine and correspondingly the currents and voltages in the machine increase significantly.

In a typical stator structure of a high-powered generator or engine the coil sections conducting electricity are embedded into stator slots formed in a stator plate package as a so-called preformed copper winding. Such coils are made of copper bars, which are formed to match into the slots before the assembly stage.

The stator core is typically maintained at ground potential, whereas the stator winding has a relatively high potential. Owing to the potential difference a conductive layer is formed on top of the insulation layer on the surface of the coils. The purpose of the conductive layer is to restrict the considerable electrical field strength appearing on the surface of the insulation, and thus to prevent sparking that in practice rapidly ages the insulation. The most significant problem that the considerable potential differences cause is formed at a termination point of the stator slots at the end of the stator. Without any field compensation layers in the winding at said point the potential of the coil surface increases to the potential of coil copper at a distance of approximately 10 mm. Such a change in potential provides such an electric field strength that undoubtedly causes surface discharges, which may damage the insulation.

Conventionally a field compensation layer at the slot opening in the stator winding is implemented using a resistive corona shield tape wrapped as an adhesive tape around the coil for a desired distance. At a linear area the resistive tape provides a voltage distribution on the surface of the coil section. In practice the conductivity of the resistive tape deviates significantly from the optimal value owing to the conventional spread caused in production and the saturation method employed. A problem with the resistive corona shield structure is often to achieve an adequately low conductivity. Additional problems arise when the tape easily heats up at the slot opening.

At present the easy production and simple dimensioning of the work allow to employ what are known as semi-conductive materials, whose conductivity at high field strengths is non-linear, i.e. depends on the field strength. However, the dimensioning of these, generally silicon carbide materials, is very inaccurate, since the conductivity thereof as well as the conductivity of all semi-conductors depends to a great extent on temperature. The resistance of the corona shield structure provides an increase in temperature where significant current heat losses occur regarding the increase in temperature. As the temperature rises the conductivity of the semiconductor increases, thus causing the current and the losses to further increase. This may, for example in a voltage testing situation, result in the destruction of the entire corona shield structure. Furthermore, when vacuum saturation is used the saturation resin changes the properties of the doped silicon carbide tapes. The effective heating of the corona shield structure also causes the structure to age prematurely.

The current heat loss occurring in a corona shield structure is relevant as regards the quality control of the windings. The most common quality control measurement, or tanδ measurement, measures the number of losses occurring on the insulation. The tanδ measurement determines the ratio between the resistive losses and the capacitive losses in the coils. If the winding comprises a resistive corona shield structure the measurement cannot directly be used to determine the condition of the insulation, since the losses occurring in the corona shield are distinctively greater than the losses in the rest of the insulation. Consequently there are no internationally acceptable standard values for comparing the quality of the insulation in medium voltage machines.

### BRIEF DESCRIPTION OF THE INVENTION

It is an object of the present invention to provide a field compensation layer in a winding that avoids the above drawbacks and allows to provide a more balanced distribution of the field at the slot opening of the winding by means of a more reliable structure. This object is achieved with a field compensation layer of the invention, characterized in that the field compensation layer comprises an arrangement forming a capacitance chain arranged onto the surface of a coil section, the arrangement comprising several circular or tapered elements surrounding the coil section connected from one side to the insulation layer of the winding made of an at least partly electricity conductive material and placed in the longitudinal direction of the winding and insulation layers arranged between said elements.

The invention is based on the idea to employ a field compensation layer based on a capacitive voltage distribution instead of a previously used resistive field compensation layer. Such a structure based on capacitive voltage distribution generates a significantly lower electrical field strength on the surface of the coil or coil section than the previous implementations. The field compensation provided by means of the field compensation layer based on the idea of the invention can also be more reliably dimensioned than previously. In addition the field compensation layer of the invention is thinner than in the solutions carried out by means of resistive or semiconductor-based tapes allowing to shorten the dimensioning of the coil ends and thus to reduce the machine in the direction of the axis.

The structure of the invention is also virtually free of losses, and thereby the warming-up caused by the loss is minimal in comparison with the previous solutions. As the warming-up is scarce the field compensation layer of the invention does not age prematurely like the previous implementations.

### BRIEF DESCRIPTION OF THE DRAWINGS

In the following the invention will be explained in greater detail by means of the preferred embodiments with reference to the accompanying drawings, in which
Figure 1 schematically shows a stator structure,
Figure 2 schematically shows the structure of a field compensation layer of the invention,
Figure 3 schematically shows an equivalent circuit of the field compensation layer of the invention, and
Figure 4 schematically shows the structure of an embodiment of the invention.

### DETAILED DESCRIPTION OF THE INVENTION

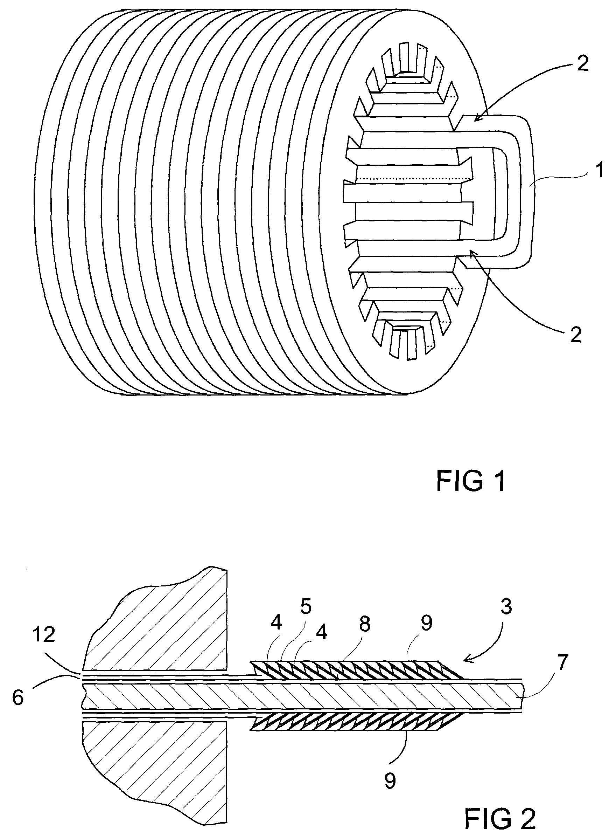

Figure 1 schematically shows a rotating electrical machine such as a stator core of an engine or a generator, to which a coil section 1 is connected for clarity. The invention generally relates to an area 2 where the coil section of the stator continues outside a stator slot, or is removed from the stator slot.

The coil section of the stator typically comprises on the surface thereof an insulation layer and on top of said layer a conductive corona shield 12 that should keep the surface of the coil section at the same potential with the stator core, i.e. at ground potential, as the stator core is commonly earthed.

Figure 2 shows the field compensation layer of the invention attached to a coil section 7, on top of which the conductive corona shield 12 is attached ending outside the stator slot as shown. In accordance with the invention the field compensation layer forms a capacitance chain that restricts the rate of rise of the insulation potential in the coil section in the longitudinal direction of the coil. In other words the insulation potential in the coil section may rise along a longer distance, in which case the change in potential for each length unit, or the electrical field strength, remains lower.

A field compensation layer 3 of the invention comprises several overlapping circular or tapered elements 4 which are at least partly made of a conductive material. Such elements 4 are insulated from one another with insulation layers 5. One side 8 of the conductive circular or tapered elements 4 is fixedly connected to an insulation layer 6 of the coil section.

As said elements 4 forming layers that protrusively diverge from the surface of the winding overlap one another, meaning that at least one previous circular or tapered element is partly below or above the following element in the longitudinal direction of the coil, and since said elements 4 are insulated from one another with insulation layers, the adjacent elements can be considered to form a capacitor. Thus the adjacent circular or tapered elements, which are wrapped in a spiral fashion around the winding, function as the capacitor plates and the insulation between the ones forms the insulation of the capacitor. The circular or tapered elements formed in a discoid manner can be charged at the potential of insulation of the coil section, as they are connected from one side to the surface of the coil section. In the Figure the field compensation layer is shown for clarity in such a manner that the circular elements and the insulations between them are not firmly pressed against one another. However, it is apparent that in reality the field compensation layer forms a firm and uniform structure that is attached to the surface of the coil section, since the field compensation layer of the invention is typically formed by wrapping a tape-like material provided with the desired electrical properties firmly around the winding.

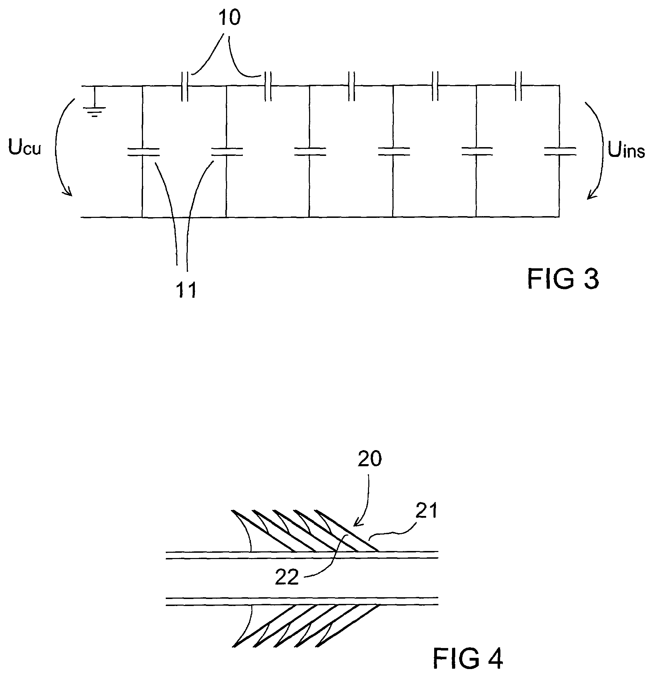

Figure 3 shows an equivalent circuit of the field compensation layer of the invention. The equivalent circuit shows a capacitance chain, whose series-connected capacitors 10 are formed as shown above of the circular or tapered elements 4 of the invention and the insulations 5 between them. What is also indicated in the Figure is the voltage Ucu of the winding in relation to the ground, or at the same time to the point of the insulation layer of the winding that is still in the immediate vicinity of the stator slot. Stray capacitance indicated as discrete components 11 in Figure 3 is naturally found to some extent between the winding and the insulation layer thereof. The stray capacitance and the capacitors 10 enable the insulation potential to rise along the entire capacitance chain provided. Then the voltage Uins at the other end of the shown chain indicates the insulation potential of the coil section surface regarding the coil section. At the end of the field compensation layer the potential of the insulation surface is nearly the same as the potential of the coil.

The Figure shows by way of example only the equivalent circuit of the field compensation layer of the invention that allows to describe the operation of the layer. Understandably the equivalent circuit may include several series-connected capacitors, but for the sake of simplicity and clarity only a few of these are shown in the Figures.

The field compensation layer of the invention is implemented in accordance with an embodiment of the invention in such a manner that the circular or tapered elements attached on top of the insulation layer of the coil section are formed by at least partly surrounding the winding with a tape-like material, one side edge of the material being arranged to be connected to the insulation layer of the surface of the winding. In such a case the tape forming the elements is attached onto the surface of the winding so that one side of the tape is attached onto the surface of the insulation layer to conduct electricity. Correspondingly the free side of the tape is insulated from the insulation layer of the coil. A tape made of an insulating material is used for insulation in accordance with an embodiment of the invention.

In practice the field compensation layer can be formed to the winding for example by alternately wrapping tapes forming circular or tapered elements 4 and tapes forming the insulation layer 5 around the winding to overlap one another along a desired distance. The tapes may comprise a self-adhesive surface in which case the tapes are reliably and easily fastened to the insulation of the coil and on top of the previously wrapped tapes.

In accordance with an embodiment of the invention the circular or tapered elements are made of a tape-like material, a first surface 21 thereof comprising dielectric material and a second surface 22 thereof comprising at least partly electricity conductive material, and the first surfaces of the circular or tapered elements form the insulations layers arranged between them. Such a tape comprising two surfaces that significantly deviate from one another as regards the electrical properties thereof allows to implement the field compensation layer of the invention in a simple manner by wrapping loops formed from the tape on top of the coil insulation in an overlapping fashion, in other words so that the tapes partly overlap one another. Such a tape may also be formed such that the upper surface is for example made of a dielectric material and the lower surface, or the surface that is attached to the insulation surface of the coil, is made of an electricity conductive material.

The field compensation layer preferably also comprises an outer insulation layer 9 arranged to surround and insulate the electricity conductive circular or tapered elements 4 as well as the insulations layers 5 between them. The outer insulation layer is formed for example by wrapping an insulating and self-adhesive tape on top of the overlapping layers.

The length and thickness of the field compensation layer of the invention can be significantly reduced in comparison with prior art field compensation layers. Owing to the small size of the field compensation layer the ends of the coil sections can also be made shorter.

The capacitive field compensation layer can be implemented using a vacuum saturation technique so that hardly any resistive loss occurs, wherefore the thermal lifespan of the layer increases. Furthermore the effects of temperature and saturation to the field compensation layer of the invention are insignificant, and therefore the functionality of the layer only depends on the dimensioning. To control the condition of the winding using tanδ measurement is reliable as no additional resistance losses occur.

It is obvious for those skilled in the art that as technology progresses the basic idea of the invention can be implemented in various ways. The invention and the preferred embodiments thereof are thus not restricted to the above examples but may vary within the scope of the claims.

## Claims

1. A field compensation layer in a winding, wherein the winding comprises an insulation layer (6) on the surface thereof, **characterized in that** the field compensation layer comprises an arrangement forming a capacitance chain arranged onto the surface of a coil section (7), the arrangement comprising several circular or tapered elements (4) surrounding the coil section (7) connected from one side to the insulation layer (6) of the winding made of an at least partly electricity conductive material and placed in the longitudinal direction of the winding and insulation layers (5) arranged between said elements.

2. A field compensation layer as claimed in claim 1, **characterized in that** the insulation layers (5) between the circular or tapered elements (4) are arranged to insulate the adjacent circular or tapered elements (4) from one another in the direction of the winding.

3. A field compensation layer as claimed in claim 1 or 2, **characterized** in that the circular or tapered elements (4) are arranged in an overlapping fashion onto the surface of the winding.

4. A field compensation layer as claimed in claim 1, 2 or 3, **characterized** in that each circular or tapered element (4) is formed by surrounding the winding at least partly with a tape-like material, one side edge (8) thereof being arranged to be attached to the insulation layer of the surface of the winding.

5. A field compensation layer as claimed in claim 4, **characterized in that** each one of the insulation layers (5) between the circular or tapered elements is formed at least partly by surrounding the winding with a tape-like material having dielectric properties.

6. A field compensation layer as claimed in claim 1, **characterized in that** circular or tapered elements (20) are made of a tape-like material, a first surface (21) thereof comprising dielectric material and a second surface (22) thereof comprising at least partly electricity conductive material, and the first surfaces (21) of the circular or tapered elements form the insulation layers arranged between the circular or tapered elements.

7. A field compensation layer as claimed in claim 6, **characterized in that** the circular or tapered elements (20) are arranged in an overlapping fashion onto the surface of the winding.

8. A field compensation layer as claimed in any one of preceding claims 1 to 7, **characterized in that** the field compensation layer also comprises an outer insulation layer (9) arranged on top of the circular or tapered elements (4) and the insulation layer (5).
